# FASCICULE DE BREVET EUROPEEN

(11) **EP 1 588 896 B1**
(45) Date de publication et mention de la délivrance du brevet: **13.06.2007**
(21) Numéro de dépôt: 05300259.8
(22) Date de dépôt: 08.04.2005
(51) Int. Cl.: B60R 5/04

(54) **Tablette arrière de véhicule automobile.**
Hintere Abdeckung für ein Kraftfahrzeug
Trunk covering for a vehicle

(30) Priorité: 21.04.2004 FR 0450743
(43) Date de publication de la demande: 26.10.2005
(73) Titulaire: Renault s.a.s., 92109 Boulogne Billancourt (FR)
(72) Inventeur: Bertholon, Patrick, 92310, Sevres (FR); Mouangue, Serge, 78420, Carrieres sur Seine (FR)

(56) Documents cités:
- DE-A- 2 513 632
- FR-A- 2 743 035
- US-B1- 6 231 096
- PATENT ABSTRACTS OF JAPAN vol. 0092, no. 97 (M-432), 25 novembre 1985 (1985-11-25) -& JP 60 135346 A (NISSAN JIDOSHA KK), 18 juillet 1985 (1985-07-18)

## Description

L'invention concerne un agencement de tablette arrière de véhicule automobile, comportant au moins une plaque avant et une plaque arrière montées entre deux parois latérales du véhicule, selon le préambule de la revendication 1, voir JP-A-60 135 346.

La modularité est un aspect de plus en plus fréquemment exigé par les utilisateurs de véhicules automobiles. Les utilisateurs souhaitent en particulier que le coffre du véhicule soit pratique et modulable en fonction de leur gré et de leurs besoins.

Le document JP-A-60135346 décrit une tablette arrière de véhicule comportant, deux plaques solidaires, dont l'une est divisée en deux parties articulées entre elles, de manière à former une table et une chaise.

On connaît par la publication FR-A-2757809 une tablette arrière amovible de véhicule automobile. La tablette peut être détachée de son support et escamotée dans le plancher du coffre. Cet agencement permet de modifier le volume du coffre et même d'accéder au coffre directement depuis l'habitacle, mais il est limité à une seule configuration.

On connaît aussi par la publication FR-A-2834952 une tablette arrière de véhicule automobile composée d'une partie avant et d'une partie arrière articulées entre elles autour d'un axe transversal. La tablette peut occuper plusieurs positions en faisant varier l'angle entre la partie avant et la partie arrière. Cependant, la tablette n'est pas amovible et ne permet aucun accès au coffre depuis l'habitacle.

Afin de pallier ces inconvénients, l'invention a pour objet un agencement de tablette arrière de véhicule automobile permettant d'offrir de nombreuses possibilités de configurations différentes.

L'invention a aussi pour objet un agencement de tablette arrière permettant d'avoir un accès au coffre directement depuis l'habitacle.

L'invention a enfin pour objet un agencement de tablette arrière d'utilisation aisée et pratique.

A cet effet, l'invention propose un agencement de tablette arrière de véhicule automobile du type cité ci-dessus, caractérisé en ce que la plaque avant et la plaque arrière sont indépendantes l'une de l'autre.

Selon d'autres caractéristiques de l'invention:
- La plaque arrière est apte à occuper au moins une position intermédiaire entre une position dite d'utilisation dans laquelle elle est dans le prolongement de la plaque avant et une position dite rangée dans laquelle elle est escamotée contre une paroi de fond du coffre.
- En position d'utilisation, un bord avant de la plaque arrière est monté à rotation autour d'un axe transversal et un bord arrière de la plaque arrière est relié à un hayon du coffre de façon à faciliter le chargement du coffre lorsque le hayon est ouvert.
- Un bord latéral de l'une des deux parties de la plaque avant est détachable de la paroi latérale du véhicule.
- Les deux parties de la plaque avant sont articulées entre elles autour d'un axe longitudinal commun.
- La plaque avant passe d'une position d'utilisation à une position rabattue par une première rotation de l'une des deux parties autour de l'axe longitudinal commun jusqu'à ce que les deux parties soient l'une contre l'autre, puis par une rotation de l'ensemble des deux parties autour de l'axe longitudinal jusqu'à ce que l'ensemble des deux parties soit contre la paroi latérale.
- Il est prévu sur au moins l'une des parois latérales du véhicule des moyens de maintien de la plaque avant en position rabattue.

D'autres caractéristiques et avantages de l'invention apparaîtront à la lecture de la description d'exemples de réalisation d'une tablette arrière de véhicule automobile en référence aux dessins annexés dans lesquels :
- La figure 1 est une vue schématique latérale d'un véhicule comportant l'agencement de tablette arrière selon l'invention dans une première configuration.
- La figure 2 est une vue schématique de dessus de l'agencement de la figure 1.
- La figure 3 est une vue schématique latérale de l'agencement de la figure 1 dans une deuxième configuration.
- La figure 4 est une vue schématique latérale de l'agencement de la figure 1 dans une troisième configuration.
- La figure 5 est une vue arrière de l'agencement de la figure 4.

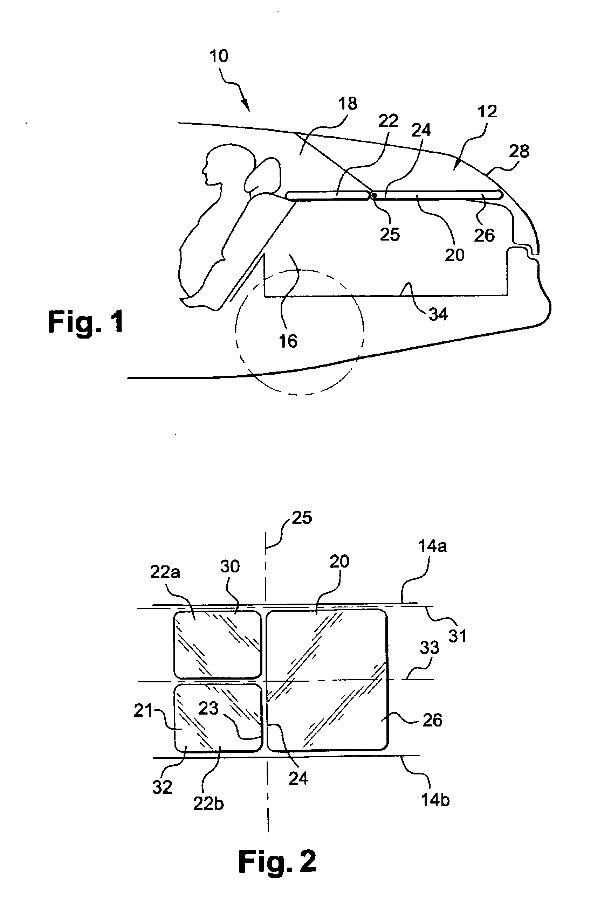

Dans la description qui suit, nous prendrons à titre non limitatif une orientation longitudinale, verticale et transversale indiquée par le trièdre L,V,T de la figure 1.

Des éléments identiques ou analogues sont désignés par les mêmes chiffres de référence.

Tel que représenté à la figure 1, un véhicule 10 comporte une tablette arrière 12, de forme globalement horizontale, agencée entre deux parois latérales 14a et 14b du véhicule 10, derrière une rangée de sièges. La tablette arrière 12 sépare un coffre 16 d'un habitacle 18 du véhicule.

La tablette 12 comporte une plaque arrière 20 et une plaque avant 22, les deux plaques étant indépendantes l'une de l'autre.

La plaque arrière 20 est amovible et peut être détachée des parois latérales 14a et 14b.

Un bord avant 24 de la plaque arrière 20 est monté à rotation autour d'un axe transversal 25, dont les extrémités peuvent être portées par les parois latérales 14a et 14b, et un bord arrière 26 de la plaque arrière 20 est relié à un ouvrant 28 tel qu'un hayon, par exemple, de façon à faciliter le chargement du coffre 16. Ainsi, lorsque l'on ouvre le hayon 28, la plaque arrière 20 pivote autour de l'axe transversal 25 et se relève.

Tel que représenté à la figure 2, la plaque avant 22 se divise longitudinalement en au moins deux parties 22a et 22b.

Selon un premier mode de réalisation, un bord latéral 30 de la partie 22a est monté à rotation autour d'un axe longitudinal 31 porté par une paroi latérale 14a du véhicule.

Le bord latéral 32 de la partie 22b est monté de façon amovible sur la paroi latérale 14b.

Les parties 22a et 22b sont montées à articulation entre elles autour d'un axe commun longitudinal 33.

En position déployée, un bord avant 21 de la plaque avant 22 coopère avec un appui, non représenté, tel qu'un rebord, par exemple, agencé le long des sièges.

Un bord arrière 23 de la plaque avant 22 prend appui sur le bord avant 25 de la plaque arrière 20. Le bord avant 23 de la plaque arrière 20 comporte un épaulement, non représenté, de façon que la plaque arrière 20 puisse tourner autour de l'axe 25 lorsque la plaque avant 22 est en appui.

Tel que représenté à la figure 1, la tablette arrière 12 est dans une première configuration dans laquelle la plaque arrière 20 et la plaque avant 22 sont chacune dans une position dite "d'utilisation" de façon qu'elles soient dans le prolongement l'une de l'autre pour former une surface globalement continue et horizontale.

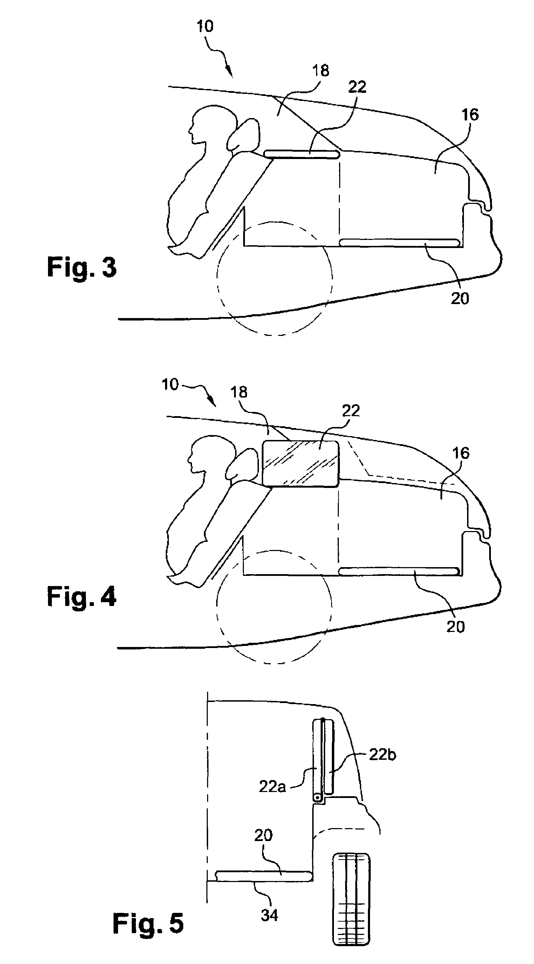

Tel que représenté à la figure 3, la plaque avant 22 est en position d'utilisation et la plaque arrière 20 est passée de sa position d'utilisation à une position dite "rangée" dans laquelle la plaque arrière 20 est contre le plancher 34 du coffre 16.

Cette configuration permet par exemple de ranger des objets encombrants dans le coffre 16, sans être gêné par la plaque arrière 20 de la tablette arrière 12, qui n'a pas besoin d'être rangée ailleurs.

De plus, un passager peut aisément, depuis l'habitacle, accéder au coffre 14.

Dans cette configuration, la plaque avant 22 offre une fonction de retenue de charge pour les objets placés dans le coffre 16.

En outre, il peut être prévu un évidement à l'intérieur de la plaque avant 22, de façon à pouvoir y ranger de petits objets qui ne risquent pas d'être éjectés en cas de choc ou de freinage brusque.

Cette configuration permet également de transporter dans le coffre, sans danger pour les passagers, un animal tel qu'un chien, par exemple, la plaque avant 22 formant alors en plus un moyen de séparation entre l'habitacle et l'animal.

Tel que représenté à la figure 4, la plaque arrière 20 est en position rangée. La plaque avant 22 se trouve dans une position escamotée dans laquelle la plaque avant 22 est rabattue contre la paroi latérale 14a.

Tel que représenté à la figure 5, le passage de la plaque avant 22 de sa position d'utilisation à sa position escamotée s'effectue en deux étapes. Dans une première étape, après avoir été désolidarisée de la paroi 14b, la partie 22b est rabattue, par une rotation vers le haut autour de l'axe commun 33, le long de la partie 22a. Dans une deuxième étape, l'ensemble formé par la partie 22a et la partie 22b est rabattu contre la paroi 14a par une rotation vers le haut autour de l'axe 31.

Il est prévu des moyens de maintien, non représentés, de la plaque avant 22 en position escamotée.

Ainsi, l'accès au coffre est complètement dégagé et la plaque avant 22 ainsi que la plaque arrière 20 ne sont pas gênantes. Il est alors possible d'y charger des objets encombrants et de grandes dimensions. De plus la tablette 12 ainsi rabattue ne gêne pas la visibilité arrière.

Dans l'exemple décrit ici, la plaque avant 22 est escamotée contre la paroi latérale 14a mais on pourrait également prévoir de l'escamoter le long de l'autre paroi latérale 14b.

On pourrait aussi prévoir que la plaque avant 22 soit rabattue vers le bas.

Dans un deuxième mode de réalisation de la tablette arrière 12, non représenté, les parties 22a et 22b de la plaque avant 22 sont séparables, chacune étant montée à rotation autour d'un axe longitudinal porté par la paroi latérale 14a,14b. Ainsi chaque partie 22a, 22b est rabattue contre la paroi latérale 14a,14b.

Dans un troisième mode de réalisation, non représenté, la plaque arrière peut occuper une position intermédiaire entre la position d'utilisation et la position rangée.

Avantageusement, il peut être prévu des glissières verticales de façon à faciliter le passage de la plaque arrière 20 d'une position à une autre.

## Revendications

1. Agencement d'une tablette arrière (12) de véhicule automobile (10), comportant au moins une plaque avant (22) et une plaque arrière (20) montées entre deux parois latérales (14a,14b) du véhicule (10), la plaque arrière (20) étant amovible et la plaque avant (22) étant divisée longitudinalement en au moins deux parties (22a, 22b), **caractérisé en ce que** la plaque avant (22) et la plaque arrière (20) sont indépendantes l'une de l'autre.

2. Agencement d'une tablette arrière (12) selon la revendication 1, **caractérisé en ce que** la plaque arrière (20) est apte à occuper au moins une position intermédiaire entre une position dite d'utilisation dans laquelle elle est dans le prolongement de la plaque avant (22) et une position dite rangée dans laquelle elle est escamotée contre une paroi de fond du coffre (14).

3. Agencement d'une tablette arrière (12) selon la revendication 2, **caractérisé en ce qu**'en position d'utilisation, un bord avant (24) de la plaque arrière (20) est monté à rotation autour d'un axe transversal (25) et un bord arrière (26) de la plaque arrière (20) est relié à un hayon (28) du coffre (14) de façon à faciliter le chargement du coffre (14) lorsque le hayon (28) est ouvert.

4. Agencement d'une tablette arrière (12) selon l'une quelconque des revendications précédentes, **caractérisé en ce qu**'un bord latéral (30,32) de l'une des deux parties (22a,22b) de la plaque avant (22) est détachable de la paroi latérale (14a,14b) du véhicule (10).

5. Agencement d'une tablette arrière (12) selon l'une quelconque des revendications précédentes, **caractérisé en ce que** les deux parties (22a,22b) de la plaque avant (22) sont articulées entre elles autour d'un axe longitudinal commun (33).

6. Agencement d'une tablette arrière (12) selon la revendication précédente, **caractérisé en ce que** la plaque avant (22) passe d'une position d'utilisation à une position rabattue par une première rotation de l'une des deux parties (22a,22b) autour de l'axe longitudinal commun (33) jusqu'à ce que les deux parties (22a,22b) soient l'une contre l'autre, puis par une rotation de l'ensemble des deux parties (22a,22b) autour de l'axe longitudinal (31) jusqu'à ce que l'ensemble des deux parties (22a,22b) soit contre la paroi latérale (14a,14b).

7. Agencement d'une tablette arrière (12) selon la revendication précédente, **caractérisé en ce qu**'il est prévu sur au moins l'une des parois latérales (14a) du véhicule des moyens de maintien de la plaque avant (22) en position rabattue.

## Claims

1. Design of motor vehicle (10) rear parcel shelf (12) comprising at least a front panel (22) and a rear panel (20) mounted between two side walls (14a, 14b) of the vehicle (10), the rear panel (20) being removable and the front panel (22) being split longitudinally into at least two parts (22a, 22b), **characterized in that** the front panel (22) and the rear panel (20) are independent of one another.

2. Design of rear parcel shelf (12) according to Claim 1, **characterized in that** the rear panel (20) is able to occupy at least one position that is intermediate between a so-called position of use in which it is in the continuation of the front panel (22) and a so-called stored position in which it is retracted against a bottom wall of the boot (14).

3. Design of rear parcel shelf (12) according to Claim 2, **characterized in that**, in the position of use, a front edge (24) of the rear panel (20) is mounted so that it can rotate about a transverse axis (25) and a rear edge (26) of the rear panel (20) is connected to a hatch (28) of the boot (14) so as to make it easier to load the boot (14) when the hatch (28) is open.

4. Design of rear parcel shelf (12) according to any one of the preceding claims, **characterized in that** a lateral edge (30, 32) of one of the two parts (22a, 22b) of the front panel (22) can be detached from the side wall (14a, 14b) of the vehicle (10).

5. Design of rear parcel shelf (12) according to any one of the preceding claims, **characterized in that** the two parts (22a, 22b) of the front panel (22) are hinged together about a common longitudinal axis (33).

6. Design of rear parcel shelf (12) according to the preceding claim, **characterized in that** the front panel (22) is moved from a position of use into a folded position by a first rotation of one of the two parts (22a, 22b) about the common longitudinal axis (33) until the two parts (22a, 22b) are against one another, then by rotating the two parts (22a, 22b) together about the longitudinal axis (31) until the combination of the two parts (22a, 22b) lies against the side wall (14a, 14b).

7. Design of rear parcel shelf (12) according to the preceding claim, **characterized in that** means for holding the front panel (22) in the folded position are provided on at least one of the side walls (14a) of the vehicle.

## Patentansprüche

1. Anordnung einer Heckablage (12) eines Kraftfahrzeugs (10), die mindestens eine vordere Platte (22) und eine hintere Platte (20) aufweist, die zwischen zwei Seitenwänden (14a, 14b) des Kraftfahrzeugs (10) installiert sind, wobei die hintere Platte (20) abnehmbar ist und die vordere Platte (22) längs in mindestens zwei Teile (22a, 22b) geteilt ist, **dadurch gekennzeichnet, dass** die vordere Platte (22) und die hintere Platte (20) voneinander unabhängig sind.

2. Anordnung einer Heckablage (12) nach Anspruch 1, **dadurch gekennzeichnet, dass** die hintere Platte (20) mindestens eine Zwischenposition zwischen einer so genannten Gebrauchsposition, in der sie sich in der Verlängerung der vorderen Platte (22) befindet, und einer so genannten Verstauposition, in der sie gegen eine Wand des Kofferraumbodens (14) eingezogen ist, einnehmen kann.

3. Anordnung einer Heckablage (12) nach Anspruch 2, **dadurch gekennzeichnet, dass** in Gebrauchsposition eine vordere Kante (24) der hinteren Platte (20) drehend um eine Querachse (25) installiert ist und eine hintere Kante (26) der hinteren Platte (20) mit einer Heckklappe (28) des Kofferraums (14) so verbunden ist, dass das Laden des Kofferraums (14) bei offener Heckklappe (28) erleichtert wird.

4. Anordnung einer Heckablage (12) nach einem der vorhergehenden Ansprüche, **dadurch gekennzeichnet, dass** eine seitliche Kante (30, 32) eines der zwei Teile (22a, 22b) der vorderen Platte (22) von der Seitenwand (14a, 14b) des Kraftfahrzeugs (10) abnehmbar ist.

5. Anordnung einer Heckablage (12) nach einem der vorhergehenden Ansprüche, **dadurch gekennzeichnet, dass** die zwei Teile (22a, 22b) der vorderen Platte (22) untereinander um eine gemeinsame Längsachse (33) angelenkt sind.

6. Anordnung einer Heckablage (12) nach dem vorhergehenden Anspruch, **dadurch gekennzeichnet, dass** die vordere Platte (22) von einer Gebrauchsposition in eine heruntergeklappte Position durch eine erste Drehung eines der zwei Teile (22a, 22b) um die gemeinsame Längsachse (33) übergeht, bis die zwei Teile (22a, 22b) gegeneinander liegen, danach durch eine Drehung der Einheit der zwei Teile (22a, 22b) um die Längsachse (31), bis die Einheit der zwei Teile (22a, 22b) gegen die Seitenwand (14a, 14b) anliegt.

7. Anordnung einer Heckablage (12) gemäß dem vorhergehenden Anspruch, **dadurch gekennzeichnet, dass** auf mindestens einer der Seitenwände (14a) des Kraftfahrzeugs Haltemittel der vorderen Platte (22) in heruntergeklappter Position vorgesehen sind.
